Europäisches Patentamt

(19) European Patent Office

Office européen des brevets

(11) Numéro de publication: **0 158 572**

**B1**

(12) **FASCICULE DE BREVET EUROPÉEN**

(45) Date de publication du fascicule du brevet: 02.11.88

(21) Numéro de dépôt: 85420056.5

(22) Date de dépôt: 22.03.85

(51) Int. Cl.⁴: **C 07 F 9/50**

ERRATUM

(SEITE, SPALTE, ZEILE)
(PAGE, COLUMN, LINE)
(PAGE, COLONNE, LIGNE)

| DIE TEXTSTELLE :<br>TEXT PUBLISHED :<br>LE PASSAGE SUIVANT : | | | LAUTET BERICHTIGT:<br>SHOULD READ :<br>DEVRAIT ETRE LU : |
|---|---|---|---|
| ci-après TPPDS et TPPTS) | 2 | 13 | ci-après TPPMS et TPPTS) |
| préparation de TPPTS comprenant | 2 | 55 | préparation de PPTS comprenant |
| égale 25 à 33% | 2 | 62 | égale à 33% |
| un hydorlysat sulfurique | 2 | 64 | un hydrolysat sulfurique |
| de préférance entre | 3 | 3 | de préférence entre |
| (SO$_3$ + + TPP + H$_2$SO$_4$) appelé | 3 | 10 | (SO$_3$ + TPP + H$_2$SO$_4$) appelé |
| Sa réaction de sulfonation | 3 | 14 | La réaction de sulfonation |
| H$_2$SO$_4$ compartible avec | 4 | 3 | H$_2$SO$_4$ compatible avec |
| acide hydrolyse tout | 4 | 6 | acide d'hydrolyse tout |
| (STPPTS)de TPPPTS et d'autres | 4 | 25 | (STPPTS)de TPPTS et d'autres |
| en particlier quand sa | 4 | 51 | en particulier quand sa |
| On peut par exemlpe opérer | 4 | 55 | On peut par exemple opérer |
| Rpport molaire | 7 | 1 | Rapport molaire |
| 11 3,5 - 5,6 6 - - | 7 | 50 | 11 3,5 - -5,6 6 - - |
| la pression totale jussu'à 75 | 8 | 18 | la pression totale jusqu'à 75 |
| et 8,18 g de myrcècne à 73% | 8 | 47 | et 8,18g de myrcène à 73% |

| Tag der Entscheidung<br>über die Berichtigung )<br>Date of decision on )<br>rectification: )<br>Date de décision portant )<br>sur modification: ) | 23.03.89 | Ausgabe- und Ver-<br>öffentlichungstag: )<br>Issue and publication )<br>date: )<br>Date d'edition et de )<br>publication: ) | 31.05.89 | Patbl.Nr)<br>EPB no:1 89/22<br>Bull. no:) |

**Europäisches Patentamt**

**European Patent Office**

**Office européen des brevets**

(19)

(11) Numéro de publication: **0 158 572**
**B1**

(12) **FASCICULE DE BREVET EUROPÉEN**

(45) Date de publication du fascicule du brevet:
02.11.88

(51) Int. Cl.⁴: **C 07 F 9/50**

(21) Numéro de dépôt: **85420056.5**

(22) Date de dépôt: **22.03.85**

(54) **Perfectionnement au procédé de préparation de la tri(M-sulfophényl)phosphine par hydrolyse et dilution contrôlées du sulfonat.**

(30) Priorité: **26.03.84 FR 8404631**

(43) Date de publication de la demande:
**16.10.85 Bulletin 85/42**

(45) Mention de la délivrance du brevet:
**02.11.88 Bulletin 88/44**

(84) Etats contractants désignés:
**AT BE CH DE FR GB IT LI LU NL SE**

(56) Documents cité:
**FR-A-2 314 910**
**FR-A-2 349 562**
**FR-A-2 532 318**

(73) Titulaire: **RHONE- POULENC RECHERCHES, 25 Quai Paul Doumer, F-92408 Courbevoie Cedex (FR)**

(72) Inventeur: **Barre, Charles, 39- 41, avenue Misery, F-69160 Tassin- La- Demi- Lune (FR)**
Inventeur: **Desbois, Michel, 526, chemin du Bois, F-69140 Rillieux- La- Pape (FR)**
Inventeur: **Nouvel, Jacques, 9, chemin de la Vernique, F-69160 Tassin- La- Demi- Lune (FR)**

(74) Mandataire: **Varnière- Grange, Monique, RHONE- POULENC INTERSERVICES Service Brevets Chimie Centre de Recherches de Saint- Fons B.P. 62, F-69192 Saint- Fons Cédex (FR)**

EP 0 158 572 B1

# 0 158 572

## Description

La présente invention concerne un perfectionnement au procédé de préparation de la tri(m-sulfophényl)phosphine par hydrolyse et dilution contrôlées du sulfonat.

La tri(m-sulfophényl)phosphine (dénommée ci-après TPPTS) est un produit connu, essentiellement utilisé comme ligand hydrosoluble permettant de former des complexes avec des métaux de transition, par exemple le rhodium, dans l'eau et ces solutions peuvent être employées notamment comme catalyseur pour la synthèse de composés aldéhydiques par hydroformylation d'oléfines comme cela est écrit dans les brevets français 2 314 910, 2 478 078 et le brevet européen 44 771.

Une synthèse en est décrite dans le brevet français 2 314 910. A l'exemple 1 de ce brevet, on prépare ce produit sous la forme de son sel de sodium par sulfonation de la triphénylphospine (dénommée ci-après TPP) par l'oléum à 20 % en poids d'anhydride sulfurique ($SO_3$). On obtient ainsi la triphénylphosphine mono-, di- et trisulfonée (respectivement dénommées ci-après TPPDS et TPPTS) en mélange avec les oxydes de ces trois produits (oxydes respectivement dénommés ci-après OTPPMS, OTPPDS et OTPPTS).

On arrête ensuite la reaction de sulfonation par hydrolyse du $SO_3$ en excès présent dans le milieu réactionnel, avec de l'eau. On obtient ainsi un hydrolysat riche en acide sulfurique et comprenant la triphénylphosphine sulfonée sous forme acide.

Pour isoler ce dernier composé sous forme de sel neutre, on peut neutraliser l'hydrolysat, par exemple à la soude, de façon à diminuer par cristallisations successives les anions sulfates sous forme de sulfate de sodium en milieu aqueux, puis on cristallise la triphénylphosphine sulfonée sous forme de son sel de sodium par addition de méthanol et d'éthanol, puis évaporation du solvant. Si la sulfonation de la triphénylphosphine est effectuée à 30°C pendant une vingtaine d'heures, il se forme necessairement de la TPPMS et de la TPPDS qu'il faut par la suite éliminer. Pour ce faire on effectue diverses cristallisations successives, qui conduisent à un mélange contenant 80 % en poids de sel de sodium de la tri(sulfophényl)phosphine et 20 % en poids de sel de sodium de l'oxyde de la tri(sulfophényl)phosphine.

Par ailleurs, il a été montré à l'exemple 2 du certificat d'addition 2 349 562 au brevet françs 2 314 910 que pour la TPPTS obtenue à l'exemple 2 du brevet principal, la substitution sulfonate est située en position méta.

Une telle méthode de synthèse de la TPPTS présente toutefois des inconvénients. Tout d'abord la neutralisation s'effectue avec une oxydation partielle de la phosphine et cet oxyde est gênant en ce sens qu'il augmente ainsi les quantités de diluant inerte lors de la réaction d'hydroformylation. En outre, la quantité de soude nécessaire à la neutralisation est importante, compte-tenu de la richesse de l'hydrolysat en $H_2SO_4$. Par conséquent, la quantité d'impuretés apportées par la soude est grande. Or, ces impuretés qui se retrouvent ensuite dans le produit final peuvent être génantes pour la catalyse. Enfin, lors de la réaction de sulfonation, on obtient un mélange de TPPTS, TPPDS et TPPMS très difficiles à séparer.

Dans la demande de brevet français 82/14/862 déposée le 31 août 1982 et publiée le 2 mars 1984 sous le numéro 2 532 318, on décrit un procédé de fabrication de TPPTS similaire à celui décrit dans le brevet français 2 314 910 sauf que l'on extrait, avant neutralisation par la soude, les diverses triphénylphosphines sulfonées de l'hydrolysat obtenu après arrêt de la réaction de sulfonation au moyen d'un extractant choisi notamment parmi les esters phosphoniques comme, par exemple, le dibutyl butyl phosphonate ou les esters phosphoriques comme, par exemple, le tributyl phosphate.

Ainsi, à l'exemple 2 de cette demande de brevet, après avoir effectué la sulfonation de la TPP par de l'oléum à 20 % $SO_3$ en poids dans $H_2SO_4$, on hydrolyse le $SO_3$ en excès par coulée d'une quantité stoechiomètrique d'eau distillée, puis on dilue et on obtient, après traitement par l'extractant, d'après l'exemple 4, un mélange de 72,9 % de TPPTS, 17,1 % de TPPDS et 10 % d'oxydes de triphényl phosphines sulfonées. On voit donc que, lors de l'étape de sulfonation, on forme de la TPPDS, ce qui signifie que la sulfonation est incomplète.

Il apparaît à l'heure actuelle que, parmi les diverses triarylphosphines sulfonées décrites dans le brevet français 2 214 910 et son certificat d'addition 2 349 562, la TPPTS est le meilleur des ligands pour former un complexe avec le rhodium et que la TPPTS est alors supérieure à la TPPMS et à la TPPDS.

Toutefois, pour que dans son application comme ligand la TPPTS donne les meilleurs résultats, il est nécessaire qu'elle présente une excellente pureté et, en particulier, qu'elle soit exempte de TPPMS, TPPDS (degré d'oxydation du phosphore $P^{III}$) et OTPPMS, OTPPDS et OTPPTS (degré d'oxydation du phosphore $P^V$).

Un autre procédé décrit par la demanderesse dans la demande de brevet [européen EP-A-133 410] a permis de faire un progrès très important en ce qu'il a permis d'obtenir un sulfonat pratiquement exempt de TPPDS et TPPMS.

Le procédé décrit dans cette demande vise en effet un procédé de préparation de TPPTS comprenant une sulfonation de la PP au moyen d'un mélange $H_2SO_4$-$SO_3$, puis une hydrolyse du mélange réactionnel pour arrêter la réaction de sulfonation, ledit procédé étant caractérisé en ce que, en vue d'obtenir un hydrolysat sulfurique très riche en TPPTS, on effectue l'étape de la sulfonation dans les conditions suivantes:
- la température est comprise entre 15 et 25°C,
- le rapport molaire $SO_3$/TPP est superieur ou égal à 8,
- la teneur globale en poids de $SO_3$ dans le mélange
($SO_3$ + TPP + $H_2SO_4$) en début de réaction est supérieure ou égale 25 à 33 %.

Pour arrêter la sulfonatio on coule de l'eau dans le mélange pour hydrolyser le $SO_3$ en excès en vue d'obtenir un hydorlysat sulfurique très riche en TPPTS, c'est-à-dire contenant, d'une part une très forte teneur, 85 % environ et plus (en % molaire de phosphore) de triphénylphophine sulfonée ($P^{III}$), dont 99 % (en % molaire de

2

phosphore) au moins est la TPPS et, d'autre part, une faible teneur 15 % au plus (en % molaire de phosphore) d'oxydes de triphénylphosphine sulfonée (P$^V$) dont le constituant prépondérant est l'OTPPTS.

Il est nécessaire, en outre, que la température soit comprise entre 15 et 25°C, de préférance entre 20 et 22°C. Si la température est inférieure à 15°C la cinétique de la réaction de sulfonation est trop faible.

Si la température est supérieure à 25°C environ, on obtient une augmentation très importante de la teneur en oxydes des produits sulfonés.

Il est nécessaire que le rapport molaire SO$_3$/TPP soit égal au moins à 8 et de préférence compris entre 10 et 14, de préférence entre 10 et 12.

Un rapport molaire inférieur à 8 n'entraîne pas la disparition de la TPPMS et de la TPPDS.

La teneur globale en poids de SO$_3$ dans le mélange (SO$_3$ + +TPP + H$_2$SO$_4$) appelé ci-après mélange ternaire, doit être au moins égale à 33 % en début de réaction. Une teneur inférieure à 33 %, par exemple 30 % conduirait à des teneurs en TPPMS et TPPDS élevées ou bien nécessiterait un temps de réaction extrêmement long.

Sa réaction de sulfonation se déroule dans l'acide sulfurique comme solvant et la teneur pondérale d'H$_2$SO$_4$ dans le mélange ternaire est avantageusement supérieure ou égale à 15 % en début de réaction (soit un rapport molaire H$_2$SO$_4$/TPP supérieur ou égal à 2,7) de telle sorte que la viscosité du milieu ne soit pas trop élevée pour que celui-ci reste manipulable.

Selon un mode de mise en oeuvre préféré de ce procédé, on dissout au préalable la TPP dans de l'acide sulfurique à raison d'au moins 2,7 moles d'H$_2$SO$_4$ par mole de TPP puis on atteint la teneur en poids requise en SO$_3$ par rapport au mélange ternaire en ajoutant de l'oléum ayant une teneur élevée en SO$_3$ et/ou du SO$_3$ liquide fraîchement distillé.

L'addition d'oléum concentré et/ou de SO$_3$ liquide dans la solution sulfurique s'effectue de préférence à une température voisine de 15°C, puis on porte de préférence le mélange à une température de 16 - 22°C. La durée de la réaction de sulfonation doit être suffisante pour que la totalité de la TPP de départ soit transformée en TPPTS.

Cette durée dépend essentiellement de la température du mélange réactionnel, de la teneur en SO$_3$ dans le mélange ternaire; cette durée est d'autant plus longue que la température est moins élevée et la teneur en SO$_3$ plus faible. L'homme de l'art est à même de choisir cette durée en fonction de ces paramètres.

Ainsi, pour une température de 22°C et une teneur globale en SO$_3$ dans le mélange ternaire de 50 %, une durée de 46 heures environ est suffisante pour obtenir plus de 99 % en mole de P$^{III}$ de TPPTS. En général, il est souhaitable d'avoir une durée de réaction supériure à 30 heures, de préférence 40 heures. Toutefois, si la teneur en SO$_3$ est faible et proche de la limite de 33 % environ, cette durée doit être de l'ordre de 75 heures. Par conséquent, on utilise de préférence une teneur pondérale de SO$_3$ dans le mélange ternaire supérieure à 40 % qui ne nécessite que des temps de réaction plus courts, de l'ordre de 45 heures et moins.

On s'est aperçu toutefois que la TPPTS extraite des solutions diluées par les différents procédés d'extraction connus, comme par exemple par le procédé décrit dans le brevet français 2 314 910 ou dans les demandes de brevet FR-A-2 523 318 et EP-A-133 410, présentait des teneurs en différentes impuretés assez élevées, ces impuretés étant de structure chimique connue ou inconnue, dont l'influence est toujours néfaste sur le rôle de ligand de la TPPTS, notamment pour les réactions d'hydroformylation des oléfines telles que décrites dans le brevet français 2 314 910.

Par ailleurs, on s'est apreçu que les solutions de TPPTS obtenues après hydrolyse, puis dilution des sulfonats préparés selon les différents procédés décrits ci-dessus pouvaient présenter des teneurs élevées en oxydes et, en particulier, en OTPPTS, dont la présence diminue le rendement de réaction et surtout rend moins efficace l'étape subséquente d'extraction.

Ces inconvénients apparaissent, même si l'on part de sulfonats préparés conformént au procédé décrit dans la demande de brevet EP-A-133 410, lequel a cependant permis par ailleurs de faire un progrès important, par l'obtention d'un sulfonat exempt de TPPDS et TPPMS, mais comportant toutefois généralement des quantités plus importantes d'oléum résiduel à hydrolyser que dans les autres procédés connus.

En outre dans son application industrielle comme ligand du rhodium dans les procédés d'hydroformylation des oléfines décrits dans le brevet français 2 314 910 précité, il est nécessaire pour charger des réacteurs de très grandes capacités de pouvoir disposer au démarrage d'un réacteur de plusieurs tonnes, voir plusieurs dizaines de tonnes de TPPTS de grande pureté.

La présente invention a précisément pour but de proposer un procédé de préparation de TPPTS qui soit exempte d'impuretés néfastes à son rôle ultiérieur de ligand.

Elle a également pour bur de proposer un procédé d'hydrolyse et de dilution controlées d'un sulfonat contenant de la TPPTS permettant d'obtenir un hydrolysat dont la normalité en H$_2$SO$_4$ soit adaptée ou adaptable au procédé d'extraction choisi, ledit hydrolysat ne contenant pas d'impuretés néfastes à l'efficacité du procédé d'extraction ou qui subsisteraient après ladite extraction.

La présente invention a également pour but de proposer un procédé industriel d'hydrolyse et de dilution contrôlées d'un sulfonat contenant de la TPPTS qui puisse être mis en oeuvre de façon industrielle, en continu ou en discontinu et qui permette d'aboutir à un produit final de très grande pureté et en quantité importante.

Ces buts et d'autres sont atteints par la présente invention qui concerne en effet un procédé de préparation de tri(m-sulfophényl)phosphine (TPPTS) comprenant:

(a) - une sulfonation de la triphénylphosphine (TPP) au moyen d'un mélange H$_2$SO$_4$-SO$_3$ présentant un excès de SO$_3$,

(b) - une hydrolyse de $SO_3$ en excès contenu dans le sulfonat sous (a) en vue d'arrêter la réaction de sulfonation et

(c) - une dilution de l'hydrolysat obtenu sous (b) en vue d'attendre une normalité en $H_2SO_4$ compartible avec

(d) - l'étape finale éxtraction de TPPTS,

ledit procédé étant caractérisé en ce que l'étape d'hydrolyse (b) et au moins en partie l'étape de dilution (c) sont effectuées par incorporation dudit sulfonat dans une solution aqueuse acide hydrolyse tout en maintenant la normalité en $H_2SO_4$ au cours de l'hydrolyse à une valeur supérieure à 9 N, de préférence supérieure à 11,8 N et pratiquement inférieure à 36 N (solution à presque 100 % de $H_2SO_4$), de préférence inférieure à 25 N et en évacuant au moins en partie les calories formées la température étant inférieure à 20°C.

On entend par normalité en $H_2SO_4$ la normalité découlant de l'acide sulfurique introduit au départ et de celui formé dans le milieu réactionnel par hydrolyse de $SO_3$, à l'exclusion des acides sulfoniques. Cette normalité peut être déterminée par des méthodes connues, par exemple par potentiométrie.

Par normalité en $H_2SO_4$ compatible avec l'étape finale d'extraction, on entend une normalité directement adaptée au procédé d'extraction choisi ou adaptable par simple incorporation d'eau ou d'acide surfurique selon le cas, sans précaution particulière autre que l'évacuation des calories et de préférence sous atmosphère inerte.

On a en effet découvert, conformément à la présente invention, que les impuretés connues ou inconnues indiquées ci-dessus apparaissent principalement durant l'étape d'hydrolyse et de dilution.

En effet, l'hydrolyse de $SO_3$ en $H_2SO_4$ sous l'action de l'eau n'est pas instantanée et le $SO_3$ oxyde de la TPPTS du sulfonat suivant les réactions chimiques schématiques suivantes:

$$SO_3 + TPPTS \rightarrow OTPPTS + SO_2$$
$$SO_2 + 3\,TPPTS \rightarrow 2\,OTPPTS + STPPTS$$

Il se forme donc notamment de l'oxyde (OTPPTS) et du sulfure (STPPTS) de TPPPTS et d'autres impuretés de structure inconnue. La teneur en $P^V$ augmente donc durant cette étape d'hydrolyse et de dilution.

L'apparition de ces impurtés est de plus favorisée par les quantités très importantes de calories dégagées par l'hydrolyse du $SO_3$ et la dilution d'$H_2SO_4$.

On a en outre découvert conformément à la présente invention que si le phosphore de la TPPTS se trouve sous une forme protonée, cette forme protonée protège le phosphore $P^{III}$ d'une oxydation ultérieure en $P^V$ en présence de $SO_3$ ou d'autres oxydants, dans la mesure où la normalité en $H_2SO_4$ de la solution est supérieure à 9 N, de préférence supérieure à 11,8 N.

En effet, la forme protonée donc protégée de $P^{III}$ se trouve en équilibre avec la forme non protonée de $P^{III}$, laquelle est facilement oxydable en présence de $SO_3$ ou d'autres oxydants suivant la réaction d'équilibre, en présence de $H_2SO_4$:

$$H\text{-}P^+ \equiv \quad \overset{2}{\underset{1}{\leftrightarrows}} \quad P \equiv + H^+$$

Si la normalité en $H_2SO_4$ est inférieure à 9 N, la réaction se déplace dans le sens de la flèche 1 et le phosphore $P^{III}$ se trouve à plus de 30 % molaire environ à température ambiante sous une forme non protonée qui s'oxyde facilement.

En effet pour une normalité supérieure à 20 N, 100 % molaire de phosphore $P^{III}$ se trouve sous la forme protonée. Cette teneur molaire à température ambiante s'abaisse à environ 90 % à 12 N, puis à 70 % environ à 9 N. En dessous de 9 N, l'hydrolyse de $SO_3$ et la dilution de hydrolysat en présence de $SO_3$ provoquent nécessairement l'apparition d'impuretés aisini qu'un fort taux d'OTPPTS.

Il est donc nécessaire d'effectuer l'hydrolyse et la dilution au moins partielle du sulfonat au sein d'une solution aqueuse d'hydrolyse dont la normalité en $H_2SO_4$ est supérieure à 9 N, de préférence à 11,8 N.

On a également découvert que l'hydrolysat partiellement dilué présente une stabilité dans le temps médiocre, même s'il est conservé sous atmosphère inerte, en particler quand sa normalité est inférieure à 9 N. On préconise donc, comformément à l'invention, d'effectuer immédiatement l'etape d'extraction sur l'hydrolysat dilué obtenu par le procédé de l'invention en réglant éventuellement la normalité en $H_2SO_4$ en fonction du procédé d'extraction chosi, par addition d'eau ou d'$H_2SO_4$.

On peut par exemlpe opérer comme décrit à l'exemple 1 du brevet français 2 314 910, c'est-à-dire neutraliser l'hydrolysat par une base, de préférence la soude, puis éliminer les anions sulfates par cristallisations succesives et cristalliser la TPPTS sous forme de son sel de sodium par addition de méthanol et d'éthanol, puis évaporation du solvant.

Le procédé préféré est toutefois le procédé d'extraction liquide-liquide décrit dans la demande de brevet no. 2 532 318 précité dont le contenu est incorporé comme référence dans la description de la présente demande.

Selon ce dernier procédé, on met en contact l'hydrolysat ayant une normalité en acide sulfurique comprise entre 3 et 10 N, de préférence entre 7 et 8 N, et l'extractant (phase organique), on sépare d'une part, une phase organique qui contient la TPPTS et une petite quantité d'acide sulfurique co-extrait et d'autre part, une phase aqueuse ou raffinat qui contient de l'acide sulfurique.

Parmi les extractants préférés, on utilise des alkylphosphates, comme par exemple le tributylphosphate ou

4

les phosphonates comme le dibutyl butylphosphonate.

Cette méthode de purification est particulièrement avantageuse, car l'impureté principale présente, quand on arrête l'étape de sulfonation mise en oeuvre conformément à l'invention, est essentiellement l'OTPPTS. Or, on a pu constater que la majeure partie de l'oxyde de triphénylphosphine sulfonée (OTPPTS) présente dans l'hydrolysat n'est pas extraite par l'extractant organique et reste dans la phase aqueuse.

Il reste ensuite à séparer la TPPTS de la phase organique.

Cette séparation peut se faire par la mise en contact de la phase organique avec de l'eau, si l'on veut obtenir la TPPTS sous forme d'acide libre, ou avec une solution aqueuse contenant un cation M+ d'origine minérale ou organique, si l'on veut obtenir la TPPTS sous une forme salifiée, par exemple au moyen d'une solution de soude.

En mettant en oeuvre le procédé d'hydrolyse et de dilution controlées selon l'invention, on voit que l'on peut obtenir un hydrolysat dilué au moins en partie dont la normalité en $H_2SO_4$ peut varier d'environ 36 N (près de 100 % en $H_2SO_4$) de préférence 25 N, jusqu'à 9 N, de préférence 12 N.

Pour amener cette normalité entre 7 et 8N, pour mettre en oeuvre le procédé d'extraction ci-dessus, il suffit d'incorporer de l'eau en ne contrôlant que l'évacuation au moins partielle des calories.

Pour mettre en oeuvre le procédé de l'invention d'hydrolyse et de dilution contrôlées, on peut opérer suivant diverses méthodes en continu, ou en discontinu, la seule contrainte étant que toutes ces méthodes doivent prévoir l'incorporation du sulfonat dans la solution aqueuse acide d'hydrolyse et non l'inverse, l'évacuation au moins partielle des calories formées et le maintient de la normalité en $H_2SO_4$ en cours d'hydrolyse supérieure à 9 N.

On peut ainsi prévoir d'incorporer en continu ou en discontinu le sulfonat dans une solution aqueuse d'hydrolyse présentant une normalité supérieure à 9 N, de préférence supérieure à 12 N, contenue dans un récipient convenablement réfrigéré de façon à évacuer au moins en partie les calories dégagées par la réaction d'hydrolyse de $SO_3$ et de dilution de $H_2SO_4$ en vue d'éviter de trop augmenter la température du mélange réactionnel et donc faciliter l'apparition d'impuretés.

Il est souhaitable de maintenir cette température la plus faible possible. Une température comprise entre -5 et +5°C, de préférence entre 0 et 1°C convient parfaitement, elle doit de préférence ne pas dépasser 20°C.

En cours d'opération, on peut maintenir le mélange réactionnel à la normalité souhaitée par addition d'eau ou d'eau acidifiée présentant de préférence une normalité supérieure ou égale à 9 N.

En outre, de façon à maintenir la température du mélange réactionnel entre 0 et 5°C, il est souhaitable d'injecter le sulfonat dans le milieu d'hydrolyse sous forme très divisée et d'agiter très fortement le mélange réactionnel de façon à hydrolyser le plus rapidement possible le $SO_3$ présent.

La présente invention propose un moyen préféré particulièrement commode permettant de respecter les conditions optimum d'hydrolyse et de dilution contrôlées indiquées ci-dessus. Ce moyen préféré est constitué par un dispositif dénommé ci-après "boucle" qui est constitué d'une boucle formée d'une canalisation de faible volume (quelques litres ou dizaines de litres) comportant une pompe dont la puissance et le débit sont suffisants pour maintenir un régime turbulent d'écoulement du liquide à l'intérieur de la boucle et un réfrigérant adapté pour évacuer les calories et maintenir le liquide à l'intérieur de la boucle à une témperature comprise de préférence entre -5 et +5°C et inférieure à 20°C.

Cette boucle comporte une canalisation d'entrée du sulfonat et une canalisation d'entrée d'une solution aqueuse acide d'hydrolyse présentant de préférence une normalité en $H_2SO_4$ supérieure à environ 9 N, le sulfonat et la solution aqueuse d'acide d'hydrolyse étant injectés dans la boucle par ces canalisations munies de moyens de contrôle de débit, par exemple au moyen de pompes volumétriques. L'entrée du sulfonat se présente de préférence en amont de la pompe de la boucle et l'entrée d'une solution d'hydrolyse se trouve en aval de cette même pompe, mais de préférence en amont du réfrigérant.

La boucle est également munie, de préférence en aval du réfrigérant et en amont de l'entrée du sulfonat, d'une sortie d'hydrolysat dont la normalité est donc supérieure ou égale à 9 N.

Le débit d'hydrolysat sortant est égal au débit de solution aqueuse acide d'hydrolyse et de sulfonat pénétrant à l'intérieur de la boucle.

Il est souhaitable que le rapport du débit de liquide en circulation dans la boucle sur le débit d'effluent pénétrant (ou sortant) dans la boucle soit d'au moins 100, de préférence d'au moins 300 et que le liquide dans la boucle soit maintenu sous une pression de quelques bars.

Le fonctionnement de la boucle est le suivant: au démarrage, on remplit la boucle par la solution aqueuse acide d'hydrolyse dont la normalité est supérieure à environ 9 N, puis en régime stationnaire on introduit par la canalisation d'introduction de solution aqueuse acide d'hydrolyse soit de l'eau, soit de l'eau acidifiée dont la normalité est supérieure à environ 9 N.

En effet, si la boucle fonctionne dans les condition optimales indiquées ci-dessus, le $SO_3$ est entièrement hydrolysé au niveau de la canalisation d'introduction de solution d'hydrolyse et il n'y a alors aucun inconvénient à ajouter de l'eau pure.

Dans le cas contraire et pour être certain de ne pas faire apparaître d'impuretés, il est souhaitable d'introduire une solution aqueuse acide dont la normalité est supérieure à environ 9 N.

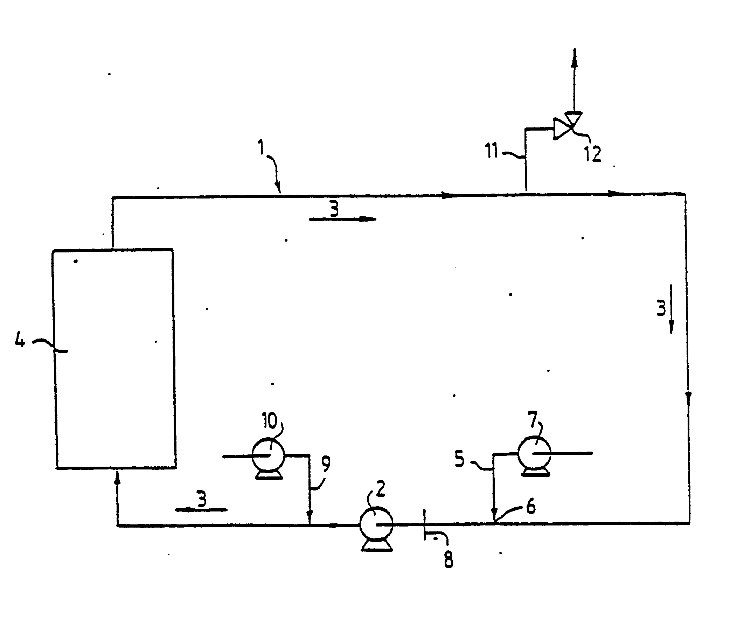

D'autres avantages et caractéristiques apparaîtront à la lecture des exemples suivants de réalisation, données à titre illustratif nullement limitatif, référence sera faite au dessin annexé sur lequel la figure unique représente schématiquement un circuit en "boucle" conforme à l'invention.

**0 158 572**

## Exemple 1

Dans un réacteur en verre d'un litre, à double enveloppe équipé d'une agitation mécanique, d'un thermomètre et permettant d'opérer sous atmosphère inerte, on introduit 230 g d'acide sulfurique à 100 % de pureté (PROLABO).

On refroidit à + 16°C avec un bain d'eau et de glace et sous agitation. On charge lentement à 20°C 100g de TPP en 1 h par fraction de 10 g (TPP Fluka purum 98 % minimum). On obtient alors une solution homogène de TPP dans l'acide sulfurique. Puis, à la température maximale de 20°C, on coule en 2 heures 560 g d'oléum à 65 % sous bonne agitation.

On maintient le mélange réactionnel entre 16 et 18°C pendant 60 h. En fin de réaction, la teneur en poids de $SO_3$ par rapport au poids du mélange réactionnel est de 30,6 %. La teneur en poids de $H_2SO_4$ par rapport au poids du mélange réactionnel est de 47,8 % et la normalité en $H_2SO_4$ est de 37 N environ, ($H_2SO_4$ 100 %). Par ailleurs, l'analyse des spectres de résonnance magnétique nucléaire du phosphore $^{31}$P (RMN $^{31}$P) sur spectromètre JEOL SX 100 MHZ à la fréquence de 40,26 MHZ donne un rapport molaire $P^{III}/P^V$ de 91,2/8,8.

## Exemple 2

On part du sulfonat obtenu conformément au mode opératoire décrit à l'exemple 1. Ce sulfonat va être traité par une boucle telle que représentée sur la figure du dessin annexe.

Sur cette figure, on voit que la boucle 1 formée d'un tubulure en alliage inoxydable calorifugée de section 4,40 $cm^2$ présente un volume total d'environ 3 l.

Elle est munie d'une pompe (2) (SALMSON 31. BAG 1 Bis GM d'un débit de 3 $m^3/h$ à 1 500 tours/mn pour une puissance de 1,2 à 1,5 KW). Cette pompe est suffisante pour faire circuler le liquide dans la boucle en régime turbulent suivant les flèches (3) avec un nombre de Reynolds d'au moins 21 000. Le liquide sortant de la pompe (2) passe à travers le condenseur ou réfrigérant (4) qui est un condenseur à plaque Alpha Laval d'un volume de 0,45 l et qui permet de maintenir la température du liquide entre 1 et 3°C.

La boucle (1) est munie en amont de la pompe (2) d'une canalisation d'entrée (5) de sulfonat injecté dans la boucle en (6) au moyen d'une pompe volumétrique (7). Juste en aval du point d'injection (6), la boucle est munie d'un dispositif (8) permettant d'améliorer la dispersion du sulfonat dans le liquide circulant dans la boucle tel un diaphragme (8).

En aval de la pompe (2), mais en amont du réfrigérant (4), la boucle (1) est munie d'une canalisation d'entrée (9) de solution aqueuse d'hydrolyse, c'est à dire d'eau ou d'eau acidifiée présentant une normalité en $H_2SO_4$ supérieure à 9 N, cette solution étant injectée au moyen d'une pompe volumétrique (10). En aval du condenseur (4) la boucle (1) est munie d'une sortie (11) d'effluant, cette sortie s'effectuant automatiquement au moyen d'un clapet taré à deux bars (12) situé sur la sortie (11).

Le fonctionnement est le suivant: on remplit la boucle avec une solution aqueuse acide d'hydrolyse qui présente de préférence la normalité visée pour l'hydrolysat final. On actionne la pompe (2) et le condenseur (4) de telle sorte que la température du liquide soit comprise entre 1 et 2°C, le débit de recirculation de la boucle est de 3 $m^3/h$, le nombre de Reynolds d'environ 21 000. Une fois le régime stationnaire atteint, on injecte le sulfonat et la solution d'hydrolyse au moyen des pompes volumétriques (7) et (10) en quantité telles que l'hydrolysat présente la normalité désirée, le temps de séjour du liquide étant compris entre 12 et 16 mm.

## Exemples 3 et 4 - exemple comparatif 5

En utilisant le dispositif et la méthode décrits à l'exemple 2 et en partant du sulfonat obtenu comme à l'exemple 1, on a obtenu les résultats suivants qui sont rassemblés dans le tableau I ci-dessous:

### Tableau I

| | Exemples | | |
|---|---|---|---|
| | 3 | 4 | 5 |
| Debit de sulfonat kg/h | 10,2 | 12,17 | 4,57 |
| Debit de solution d'hydrolyse kg/h (eau pure) | 8,95 | 3,1 | 9,11 |
| Durée de l'essai en régime stationnaire | 1 h 30 | 1 h 30 | 2 h 30 |
| Normalité en $H_2SO_4$ à la sortie de la boucle | 11,8 | 20,7 | 7,11 |

| Rpport molaire P$^{III}$/P$^V$ (RMN-$^{31}$P) au bout de 1 h 30 mn | $\frac{89,1}{10,9}$ | $\frac{89,3}{10,7}$ | $\cdot\ \frac{63}{37}$ |
|---|---|---|---|
| Impuretés autres que OPTPTS | | quasi nulles | décelables |

L'exemple comparatif 5 montre que pour une hydrolyse effectuée à une normalité en $H_2SO_4$ inférieure à 9 N, il apparaît un fort taux d'OTPPTS ainsi que d'autres impuretés.

## Exemple 6

On coule 1 kg de sulfonat obtenu en suivant le mode opératoire de l'exemple 1 dans un réacteur contenant 250 g de solution aqueuse d'hydrolyse maintenue sous agitation de normalité 9 N, refroidie à 3°C par un bain eau + glace et on maintient la température en cours d'hydrolyse à une valeur inférieure à 9°C.

La durée de la coulée est de 4 h 20 mn. On obtient une solution d'hydrolysat dont la normalité en $H_2SO_4$ est de 25 N; le rapport molaire P$^{III}$/P$^V$ est de 86/14. Il n'y a sensiblement pas d'impuretés autres que l'OTPPTS, décelables.

## Exemple 7

On part d'hydrolysats de différentes normalités en $H_2SO_4$ obtenus par la méthode de la boucle à l'exemple 2. On mesure par RMN. $^{31}$P le déplacement chimique (delta en ppm) de la TPPTS dans chacune des solutions. Comme il existe une relation linéaire connue entre la forme protonée de P et le déplacement chimique, on en déduit très facilement le pourcentage molaire de $\equiv$ P$^+$ - H. Les résultats obtenus sont rassemblés dans le tableau II ci-après:

**Tableau II**

| Hydrolysat | Normalité $H_2SO_4$ | $HSO_3$ | Température ambiante delta ppm | (*) | Température 0°C delta ppm | (*) |
|---|---|---|---|---|---|---|
| 1 | 21,48 | 1,74 | +6,3 | 100 | + 6,3 | 100 |
| 2 | 18,47 | 1,45 | + 6,0 | 97,5 | +5,9 | 97 |
| 3 | 15,85 | 1,16 | +5,6 | 94,5 | +5,67 | 93 |
| 4 | 12,51 | 0,96 | +5,4 | 93 | + 525 | 90 |
| 5 | 10,97 | 0,88 | +4,3 | 88 | +4,75 | 86 |
| 6 | 9,06 | 0,68 | +3,5 | 78 | +3,3 | 75 |
| 7 | 8,95 | 0,67 | + 1,6 | 62,5 | + 1,2 | 58,5 |
| 8 | 8,34 | 0,64 | - 0,2 | 48,5 | - 1,1 | 40,5 |
| 9 | 6,9 | 0,46 | - 3,5 | 22 | - | - |
| 10 | 4,5 | - | - 5,5 | 7 | - | - |
| 11 | 3,5 | - | 5,6 | 6 | - | - |
| 12(**) | 0 | - | - 6,3 | 0 | - 6,7 | - |

(*) = % molaire $\equiv$ P$^+$-H c'est à dire nombre de moles ($\equiv$ P$^+$-H)/nombre de moles total de P$^{III}$ ($\equiv$ P$^+$-H + $\equiv$ P)

(**) = solution de sel de sodium de la TPPTS à pH 6.

Du tableau II, il résulte que pour conserver P$^{III}$ sous une forme protonée à au moins 70 % molaire, il est nécessaire d'effectuer l'hydrolyse avec une normalité supérieure à environ 9 N.

## Exemple 8

On part de l'hydrolysat obtenu à l'exemple 3 ci-dessus, on le dilue pour arriver à une une normalité en $H_2SO_4$ de 7 N, puis on extrait la TPPTS en suivant le mode opératoire de l'exemple 3 de la demande de brevet français 2 532 318.

On effectue alors l'hydroformylation du propylène en suivant le mode opératoire de l'exemple 1 du brevet français 2 478 078.

Dans un autoclave en acier inoxydable de 125 cm³, on introduit successivement sous argon:

. 0,96 ml de solution toluénique d'éthyl-2-hexanoate de rhodium (II) à 10,4 gl⁻¹ en rhodium (0,097 matg de Rh)
. 10,95 g d'une solution aqueuse de TPPTS sous forme de son sel de Na, contenant 4,10 g de TPPTS^Na, soit 6,79 matg de P+³
. 13,20 cm³ d'eau distillée
. et 12,0 g de propène (285,7 mmoles)

On introduit alors un mélange gazeux $H_2$ + CO (1 + 1 molaire) pour avoir une pression totale de 20 bars à 20°C et on amène l'autoclave à 120°C sous agitation. Quand la température de 120°C est atteinte, on augmente la pression totale jussu'à 75 bars au moyen du mélange $H_2$ + CO et on maintient cette pression de 75 bars durant toute l'opération.

L'avanvement de la réaction est suivi par la chute de pression dans la réserve du mélange $H_2$ + CO.

Après 2 heures de réaction, l'autoclave est refroidi à 20°C et après dégazage on coule la masse réactionnelle dans une ampoule à décanter où s'opère la séparation de la phase catalytique inférieure de couleur jaune et la phase organique supérieure incolore (5,3 g).

La sélectivité en aldéhyde est égale à 100 % et le taux de linéarité en butanal exprimé en: n-butanal/(n + iso)butanals est égale à 93 %.

L'activité du catalyseur exprimé en moles d'aldéhyde par at.g de rhodium et par heure est égale à 294 et la productivité exprimé en kg d'aldéhyde par litre de solution catalytique et par heure est égale à 0,1.

La solution catalytique a été recyclée dans les mêmes conditions [7g de propène (186,7 mmoles); pression totale 50 bars ; $H_2$ + CO (1 + 1 molaire); 120°C : 2 heures].

Les résultats sont:
. Sélectivité              : 100 %
. Taux de linéarité        : 94,4 %
. Activité                 : 433
. Productivité             : 0,15
. Masse organique supérieure décantée: 6,4 g.

## Exemple 9

On utilise le même sel de sodium qu'à l'exemple 8 et on fait réagir du myrcène sur de l'acétyl acétate de méthyle conformément à l'exemple 26 de la demande de brevet européen 44 771.

Dans un réacteur en acier inoxydable de 125 cm³, on introduit successivement sous argon 0,029 g de [RhCl (cyclooctadiène - 1,5)]₂, (0,117 matg de Rh), 0,0534 g de carbonate de sodium, 8,5 cm³ d'eau distillée, 3,67 g d'une solution aqueuse de TPPTS (2,27 matg de P+³), 4 cm³ de méthaol, 10,02 d'acétylacétate de méthyle (86,3 mmoles) et 8,18 g de myrcècne à 73 % (43,9 mmoles). Le mélange est agité à 90°C pendant 3 heures.

Après refroidissement, on coule la masse réactionnelle dans une ampoule à décanter où s'opère la séparation de la phase catalytique inférieure rouge (16,41 g) et de la phase organique supérieure (15,51 g).

La phase organique contient 9,49 g de produit réactionnel se présentant sous la forme d'un mélange 45/55 de ces 2 isomères (55 pour l'isomère présentant une double liaison éthylènique à l'extérieur de la chaîne).

Les exemples 7 et 8 mettent en évidence que la TPPTS obtenue par le procédé de l'invention, du fait de l'absence quasi-totale d'impuretés autres que l'OTPPTS, donne des résultats remaquables comme ligand hydrosoluble du rhodium.

## Revendications

1. Procédé de préparation de tri(m-sulfophényl)phosphine (TPPTS) comprenant

a) une sulfonation de la triphénylphosphine (TPP) au moyen d'un mélange $H_2SO_4$-$SO_3$ présentant un excès de $SO_3$,

b) une hydrolyse du $SO_3$ en excès contenu dans le sulfonat obtenu sous (a) en vue d'arrêter la réaction de sulfonation et

c) une dilution de l'hydrolysat obtenu sous (b) en vue d'atteindre une normalité en $H_2SO_4$ compatible avec

d) l'étape finale d'extraction de TPPTS, ledit procédé étant caractérisé en ce que l'étape d'hydrolyse (b) et au moins en partie l'étape de dilution (c) sont effectuées simultanément par incorporation du sulfonat dans une solution aqueuse acide d'hydrolyse tout en maintenant la normalité en $H_2SO_4$ au cours de l'hydrolyse à une valeur supérieure à 9 N et en évacuant au moins en partie les calories formées, la température étant inférieure à 20°C.

2. Procédé selon la revendication 1, caractérisé en ce que ladite normalité en $H_2SO_4$ est comprise entre 25 N et 11,8 N.

3. Procédé selon l'une quelconque des revendications précédentes, caractérisé en ce que la température au cours de l'hydrolyse ou de la dilution est comprise entre -5 et +5°C.

4. Procédé selon l'une quelconque des revendications précédentes, caractérisé en ce que l'on incorpore le sulfonat sous une forme très divisée dans une solution aqueuse d'hydrolyse présentant une normalité supérieure à 9 N et réfrigérée en continu de façon à maintenir une température inférieure à 20°C, de préférence comprise entre -5 et +5°C.

5. Procédé selon l'une quelconque des revendications 1 à 3, caractérisé en ce que l'hydrolyse et la dilution au moins partielle, sont réalisées en continu dans une boucle (1) formée d'une canalisation comportant une pompe (2) dont la puissance et le débit sont suffisants pour maintenir un régime turbulent d'écoulement de liquide à l'intérieur de la boucle, une réfrigérant (4) adapté pour maintenir le liquide à l'intérieur de la boucle à une température inférieure à +20°C, une canalisation (5) d'entrée de sulfonat et une canalisation (9) d'entrée de solution aqueuse d'hydrolyse, toutes deux munies de moyens de contrôle de débit, respectivement (7) et (10), ainsi que d'une canalisation (11) de sortie du sulfonat hydrolysé et au moins partiellement dilué.

6. Procédé selon la revendication 5, caractérisé en ce que le liquide en circulation dans la boucle est maintenu sous pression et en ce que le rapport du débit de liquide en circulation dans la boucle sur le débit d'effluent pénètrant (ou sortant) dans la boucle est d'au moins 100, de préférence au moins 300.

7. Procédé selon la revendication 5 ou 6, caractérisé en ce que l'entrée du sulfonat est située en amont de la pompe (2) de la boucle, l'entrée de solution aqueuse d'hydrolyse est située en aval de la pompe (2), mais en amont du réfrigérant (4) et de la sortie (11) de l'hydrolysat est située en aval du réfrigérant (4), mais en amont de l'entrée (5) du sulfonat.

8. Procédé selon l'une quelconque des revendications 5 à 7, caractérisé en ce qu'au départ on remplit la boucle par la solution aqueuse d'hydrolyse dont la normalité est supérieure à 9 N.

9. Procédé selon l'une quelconque des revendications 5 à 8, caractérisé en ce que, en régime stationnaire on introduit dans la canalisation (9) de l'eau ou de préférence de l'eau acidifiée dont la normalité est supérieure à 9 N.

10. Procédé selon l'une quelconque des revendications précédentes, caractérisé en ce qu'on règle la normalité en acide sulfurique de l'hydrolysat dilué entre 3 et 10 N, de préférence entre 7 et 8 N, puis on met en contact l'hydrolysat avec un extractant choisi par les esters phosphoniques et les esters phosphoriques.

11. Procédé selon l'une quelconque des revendications précédentes, caractérisé en ce qu'on effectue l'étape de sulfonation dans les conditions suivantes:
- température        : 15 - 25°C
- rapport molaire    : $SO_3/TPP$ supérieur ou égal à 8
- teneur globale en poids de $SO_3$ en début de réaction par rapport au poids du mélange réactionnel supérieure ou égale à 33 %.

## Patentansprüche

1. Verfahren zur Herstellung von Tri(m-sulfophenyl)phosphin (TPPTS), in dem
a) Triphenylphosphin (TPP) mit einer $SO_3$ im Überschuß enthaltenden Schwefelsäure sulfoniert wird,
b) überschüssiges $SO_3$ in dem aus a) erhaltenen Produkt hydrolysiert wird, um die Reaktion abzubrechen, und
c) das Hydrolysat aus b) verdünnt wird auf eine Schwefelsäure-Konzentration, die
d) die Extraktion von TPPTS gestattet,
dadurch gekennzeichnet, daß man die Verfahrensstufe der Hydrolyse b) und zumindest einen Teil der Verdünnung c) gleichzeitig durchführt, in dem das Produkt aus a) in eine wässrige Säure eingebracht wird, um die Konzentration der Schwefelsäure während der Hydrolyse auf über 9n zu halten, und man zumindest einen Teil der entwickelten Wärme unter Einhaltung einer Temperatur von < 20°C abführt.

2. Verfahren nach Anspruch 1,
dadurch gekennzeichnet, daß man eine Schwefelsäure-Konzentration zwischen 25 und 11,8n aufrechterhält.

3. Verfahren nach Anspruch 1 oder 2,
dadurch gekennzeichnet, daß man die Temperatur bei der Hydrolyse oder Verdünnung zwischen -5 und +5°C hält.

4. Verfahren nach einem der vorhergehenden Ansprüche,
dadurch gekennzeichnet, daß man das Produkt aus a) in sehr fein verteilter Form in die wässrige Säure einer Konzentration > 9n einträgt und kühlt, um die Temperatur unter 20°C, vorzugsweise zwischen -5°C und +5°C, zu halten.

5. Verfahren nach Anspruch 1 bis 3,

dadurch <u>gekennzeichnet</u>, daß man die Hydrolyse und zumindest einen Teil der Verdünnung in einem Kreissystem (1) kontinuierlich durchführt, in welchem sich eine Förderpumpe (2) für turbulente Strömung der Flüssigkeit innerhalb des Systems, ein Kühlaggregat (4), um die Flüssigkeit in dem System auf einer Temperatur < 20°C zu halten, und eine Zuleitung (5) für das Produkt aus a) sowie eine Zuleitung (9) für die wässrige Säurelösung zur Hydrolyse, jeweils mit Regeleinrichtung (7) bzw. (10) versehen sowie eine Ableitung (11) für das zumindest teilweise verdünnte Hydrolysat, befindet.

6. Verfahren nach Anspruch 5, ·

dadurch <u>gekennzeichnet</u>, daß die Flüssigkeit im Kreissystem unter Druck gehalten wird und der Flüssigkeitsdurchsatz durch das System gegenüber dem Zulauf oder Ablauf zumindest 100, vorzugsweise zumindest 300, beträgt.

7. Verfahren nach Anspruch 5 oder 6,

dadurch <u>gekennzeichnet</u>, daß die Zuführung des Produkts aus a) vor der Pumpe (2) im Kreissystem erfolgt, die Zuführung der wässrigen Säure für die Hydrolyse nach der Pumpe (2) jedoch vor dem Kühlaggregat (4) liegt und daß der Ablauf (11) nach dem Kühlaggregat (4) jedoch vor der Produktzuführung (5) vorgesehen ist.

8. Verfahren nach einem der Ansprüche 5 bis 7,

dadurch <u>gekennzeichnet</u>, daß man beim Anfahren des kontinuierlichen Verfahrens das Kreissystem mit der wässrigen Säurelösung mit einer Konzentration von > 9n füllt.

9. Verfahren nach einem der Ansprüche 5 bis 8,

dadurch <u>gekennzeichnet</u>, daß man bei stationärem Betrieb über die Zuleitung (9) Wasser oder bevorzugt verdünnte Säure mit einer Konzentration von > 9n zuführt.

10. Verfahren nach einem der vorhergehenden Ansprüche,

dadurch <u>gekennzeichnet</u>, daß man die Konzentration des verdünnten Reaktionsprodukts auf 3 bis 10n, vorzugsweise 7 bis 8n, einstellt und dann das Hydrolysat mit einem Extraktionsmittel in Form von Phosphon- und/oder Phosphorsäureestern zusammen bringt.

11. Verfahren nach einem der vorhergehenden Ansprüche,

dadurch <u>gekennzeichnet</u>, daß man die Sulfonierung nach a) bei 15°C bis 25°C unter Einhaltung eines Molverhältnisses $SO_3/TPP \geqq 8$ und einem Gesamtgewicht an $SO_3$ zum Reaktionsbeginn gegenüber dem Gewicht der Reaktionsmischung bei $\geqq 33\%$ vornimmt.


## Claims

1. Process for the preparation of tri(m-sulphophenyl)phosphine (TPPTS) comprising

a) a sulphonation of triphenylphosphine (TPP) by means of a $H_2SO_4$-$SO_3$ mixture containing an excess of $SO_3$,

b) a hydrolysis of the excess $SO_3$ present in the sulphonate obtained under (a) in order to stop the sulphonation reaction and

c) a dilution of the hydrolysate obtained under (b) in order to attain a $H_2SO_4$ normality compatible with

d) the final step of extraction of TPPTS,

the said process being characterized in that the hydrolysis step (b) and at least a part of the dilution step (c) are carried out simultaneously by incorporating the sulphonate in an acid aqueous hydrolysis solution while maintaining the $H_2SO_4$ normality during the hydrolysis at a value above 9 N and removing at least partly the heat produced, the temperature being below 20°C.

2. Process according to Claim 1, characterized in that the said $H_2SO_4$ normality is between 25 N and 11.8 N.

3. Process according to either of the preceding Claims, characterized in that the temperature during the hydrolysis or the dilution is between -5 and +5°C.

4. Process according to any one of the preceding Claims, characterized in that the sulphonate is incorporated in a finely divided form in an aqueous hydrolysis solution which has a normatity above 9 N and is continuously cooled so as to maintain a temperature below 20°C, preferably between -5 and +5°C.

5. Process according to any one of claims 1 to 3, characterized in that the hydrolysis and at least partial dilution are carried out continuously in a loop (1) formed by a pipework incorporating a pump (2) the power and the output of which are sufficient to maintain a turbulent liquid flow regime inside the loop, a cooler (4) suitable for keeping the liquid inside the loop at a temperature below +20°C, a sulphonate inlet line (5) and an inlet line (9) for aqueous hydrolysis solution, both equipped with means for flow rate control, (7) and (10) respectively, and an outlet line (11) for the hydrolysed and at least partially diluted sulphonate.

6. Process according to claim 5, characterized in that the liquid circulating in the loop is kept under pressure and the ratio of the flow rate of the liquid circulating in the loop to the flow rate of the effluent entering (or leaving) the loop is at least 100, and preferably 300.

7. Process according to Claim 5 or 6, characterized in that the sulphonate inlet is situated upstream of the loop pump (2), the aqueous hydrolysis solution inlet is situated downstream of the pump (2), but upstream of the cooler (4) and the hydrolysate outlet (11) is situated downstream of the cooler (4), but upstream of the sulphonate inlet (5).

8. Process according to any one of Claims 5 to 7, characterized in that at the start-up the loop is filled with the aqueous hydrolysis solution the normality of which is above 9 N.

9. Process according to any one of Claims 5 to 8, characterized in that water or preferably acidified water the normality of which is above 9 N is introduced in a stationary regime into the line (9).

10. Process according to any one of the preceding claims, characterized in that the sulphuric acid normality of the diluted hydrolysate is regulated between 3 and 10 N, preferably between 7 and 8 N, and then the hydrolysate is placed in contact with an extractant chosen from phosphonic esters and phosporic esters.

11. Process according to any one of the preceding claims, characterized in that the sulphonation step is carried out under the following conditions:
- temperature     : 15 - 25°C
- molar ratio       : $SO_3$/TPP above or equal to 8
- total weight concentration of $SO_3$ at the start of reaction relative to the weight of the reaction mixture above or equal to 33 %.